# EUROPÄISCHE PATENTSCHRIFT

(11) **EP 2 619 483 B1**
(45) Veröffentlichungstag und Bekanntmachung des Hinweises auf die Patenterteilung: **18.04.2018**
(21) Anmeldenummer: 11757551.4
(22) Anmeldetag: 13.09.2011
(51) Int. Cl.: F16H 63/14

(54) **SCHALTVORRICHTUNG MIT ÜBERSCHALTSPERRE**
SHIFT DEVICE WITH OVER-SHIFT LOCK
DISPOSITIF DE COMMANDE AVEC BLOCAGE DE DÉPASSEMENT

(30) Priorität: 21.09.2010 DE 102010041118
(43) Veröffentlichungstag der Anmeldung: 31.07.2013
(73) Patentinhaber: Bayerische Motoren Werke Aktiengesellschaft, 80809 München (DE)
(72) Erfinder: BUECHERL, Philipp, 80805 München (DE); ZETTLER, Roland, 81927 München (DE); MATHERN, Lionel, 67170 Bemolsheim (FR)
(86) Internationale Anmeldenummer: PCT/EP2011/004594
(87) Internationale Veröffentlichungsnummer: WO 2012/038040

(56) Entgegenhaltungen:
- DE-A1- 2 256 891
- DE-A1- 19 617 988

## Beschreibung

Die vorliegende Erfindung betrifft eine Schaltvorrichtung mit Überschaltsperre für ein mehrgängiges Getriebe für Kraftfahrzeuge gemäß dem Oberbegriff des Patentanspruches 1.

Derartige Schaltvorrichtungen finden sich häufig in Motorrädern oder motorradähnlichen Fahrzeugen mit drei oder mehr Rädern. Sie erlauben eine sequentielle Schaltbetätigung, das heißt, bei jeder Schaltbetätigung wird im Getriebe der nächsthöhere oder nächstniedrigere Gang eingelegt.

Die DE 196 17 988 C2 beschreibt eine derartige Schaltvorrichtung. Die vorbekannte Lösung sieht einen schwenkbaren Schaltarm vor, der durch einen bspw. mit Fuß betätigbaren Schalthebel beaufschlagt wird. An dem Schaltarm ist ein Schaltglied angelenkt, das beim Verschwenken des Schaltarms eine Schaltwelle um einen bestimmten Winkel dreht. Hierfür sieht das Schaltglied hakenförmige Klauen vor, die im Eingriff stehen mit kreisförmig um die Achse der Schaltwelle angeordneten Mitnehmerstiften. Verbunden mit der Schaltwelle ist eine Schaltwalze mit in Nuten gehaltenen Schaltgabeln. Beim Verdrehen der Schaltwelle und damit der Schaltwalze schalten die Gabeln in bekannter Weise die Gänge im Fahrzeuggetriebe.

Neben dem Schaltglied ist bei der bekannten Ausführung am Schaltarm ein Sperrelement angelenkt, das sich synchron mit dem Schaltglied bewegt. Bügelelemente, ausgeformt am Sperrelement, dienen als Anschläge für Mitnehmerstifte der Schaltwelle, mit dem Ziel, dass bei einem Schaltwunsch sich die Schaltwelle nur um den vorgesehenen Winkelabstand dreht.

Des Weiteren ist aus der DE-A1 -2256891, welche alle Merkmale des Oberbegriffs des Anspruchs 1 offenbart, eine Schalteinrichtung für Wecheslgetriebe insbesondere von Zweiradkraftfahrzeugen bekannt, bestehend aus einer Doppelhakenklinke, die auf einer stufenweise zu schwenkenden Kurvenwalze angeordnete Schaltbolzen erfasst.

Aufgabe der Erfindung ist es, bei einer gattungsgemäßen Schaltvorrichtung das Verdrehen der Schaltwelle bei einem Schaltwunsch mit einfachen Mitteln zu begrenzen.

Diese Aufgabe wird durch die Merkmale des Patentanspruches 1 gelöst. Nach der Erfindung ist das Schaltglied zweiteilig ausgelegt. Das erste Bauteil, ein Betätigungselement, ist mit dem Schalthebel gekoppelt und überträgt den durch den Schalthebel eingeleiteten Schaltwunsch auf das zweite Bauteil, einem Mitnehmerelement mit hakenförmigen Klauen. Beide Bauteile sind entlang ihrer Längsachse federnd gegeneinander verschiebbar und weisen korrespondierende Langlöcher auf. Eine Schaltwelle durchdringt beide Langlöcher. Am vorbestimmten Ende einer Schwenkbewegung des Schaltglieds blockieren sich Schaltwelle, Betätigungselement und Mitnehmerelement gegenseitig, so dass ein durch die Trägheit hervorgerufenes, selbständiges Weiterdrehen der Schaltwelle wirksam verhindert wird.

Beim Loslassen des Schalthebels dreht das Schaltglied durch eine Rückstellfeder zurück und die Kontur des Langlochs in dem Mitnehmerelement erlaubt ein Lösen der Blockierung. Hierfür weist die obere Längsseite dieses Langloches die Form eines Satteldachs auf. Beim Lösen wird das Mitnehmerelement durch den ihm in diesem Moment zugeordneten Mitnehmerstifte nach unten gedrängt, während sich die Schaltwelle entlang einer Dachschräge des Langloches bewegt.

Weitere Vorteile der Erfindung ergeben sich aus der nachfolgenden Beschreibung eines Ausführungsbeispiels anhand der dazugehörenden Zeichnung. Es zeigen:
- Figur 1: eine perspektivische Ansicht eines erfindungsgemäßen zweiteiligen Schaltglieds,
- Figur 2: dasselbe Schaltglied wie in Figur 1 von der Rückseite,
- Figur 3: das Schaltglied in Frontansicht und in einer Neutralstellung und
- Figur 4: die Stellung des Schaltglieds bei einem Gangwechsel.

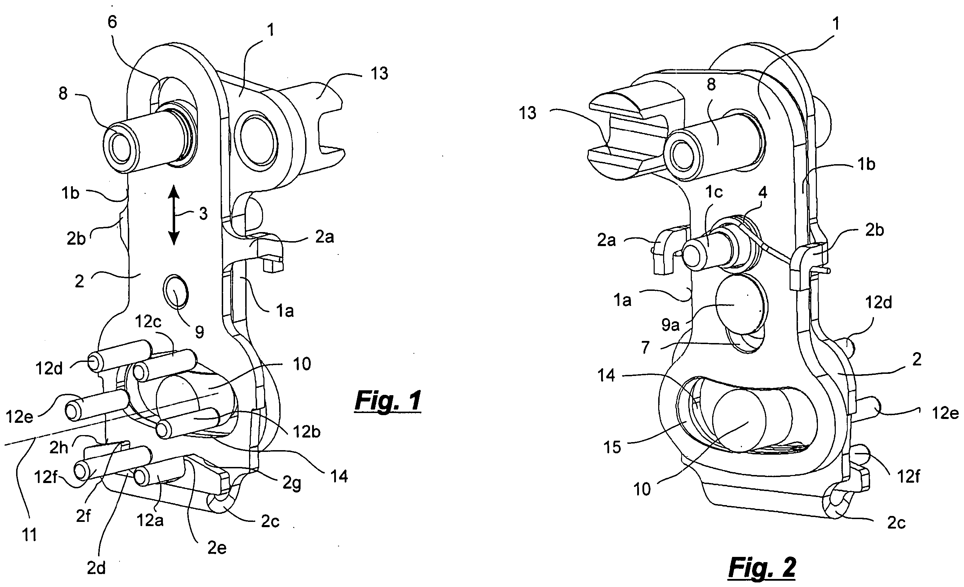

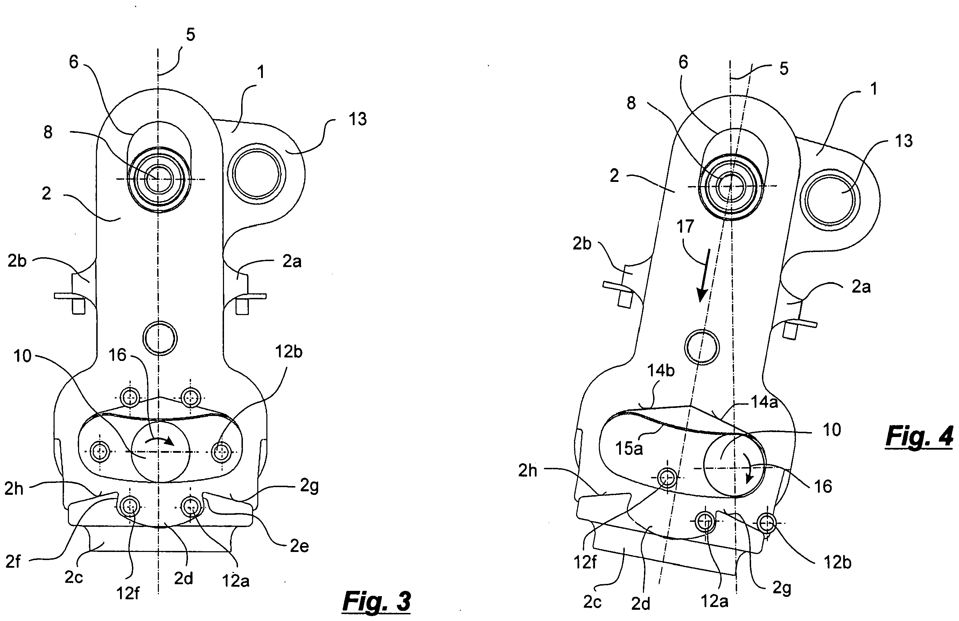

Das Schaltglied nach den Fig. 1 und 2 besteht aus zwei aneinander gelegten Bauteilen aus Flachmaterial, nämlich einem Betätigungselement 1 und einem Mitnehmerelement 2. Wie ein Doppelpfeil 3 andeutet, lassen sich diese beiden Elemente gegeneinander verschieben. Genauer gesagt, kann sich das Mitnehmerelement 2 gegen die Kraft einer Rückholfeder 4 (Fig. 2) entlang der Längsachse 5 (Fig. 3) des Schaltglieds gegenüber dem Betätigungselement 1 innerhalb eines vorgegebenen Weges nach oben und unten verschieben. Die Rückholfeder 4 ist als Schraubenfeder auf einen Zapfen 1c des Betätigungselements 1 aufgesteckt. Die Begrenzung des Verschiebeweges erfolgt durch zwei senkrechte, also in Richtung der Längsachse 5, ausgerichtete Langlöcher 6 und 7, wobei ein oberes Langloch 6 im Mitnehmerelement 2 und ein etwa mittig angeordnetes Langloch 7 im Betätigungselement 1vorgesehen sind. Die Ortsangaben "oben" und "mittig" - auch sonstige Ortsangaben im weiteren Verlauf der Beschreibung - beziehen sich wiederum auf die Längsachse 5 des Schaltglieds und auf dessen in den Figuren dargestellten Einbaulage.

Im Langloch 6 ist ein mit dem Betätigungselement 1 fest verbundener Bolzen 8 geführt, während das Langloch 7 einen Schaft 9 eines weiteren Bolzens aufnimmt, der in dem Mitnehmerelement 2 befestigt ist und der an seiner gegenüberliegenden, das Langloch 7 durchstoßenen Seite einen scheibenförmigen Bolzenkopf 9a aufweist. Der Bolzen 8 ist mit seiner in Fig. 1 gezeigten Seite in einem nicht gezeichneten Getriebegehäuse befestigt. Der Bolzenkopf 9a hat einen größeren Außendurchmesser als die Breite des Langlochs 7, so dass dadurch die beiden Bauteile, Betätigungselement 1 und Mitnehmerelement 2, zusammengehalten sind. Die Länge des Bolzenschafts 9 ist dabei so gewählt, dass die Bauteile nicht gegeneinander verspannt sind, sondern noch die erwähnte Relativbewegung zulassen.

Das Mitnehmerelement 2 weist seitliche Laschen 2a und 2b auf, die rechtwinklig zu dem Betätigungselement 1 hin gebogen sind. Mit diesen abgebogenen Abschnitten bewegen sich die Laschen 2a und 2b entlang äußeren Stirnflächen 1a, 1b des Betätigungselements 1. Im weiteren Verlauf sind die Laschen 2a und 2b nach unten abgebogen und halten mit diesen Abschnitten die Enden der Rückholfeder 4. Schließlich sieht das Betätigungselement 1 an der dem Mitnehmerelement 2 abgewandten, oberen Seite eine Aufnahme 13 vor für den Anschluss eines nicht dargestellten Schaltarms, der gegebenenfalls über weitere Verbindungsglieder von einem üblichen Schalthebel betätigt wird. Wird der Schalthebel bei einem Gangwechsel betätigt, schwenkt das Schaltglied um den Bolzen 8 entweder nach rechts oder links - in Fig. 4 ist beispielsweise eine Verschwenkung nach links dargestellt.

Wie bereits erwähnt, zeigen die Figuren die Einbaulage des Schaltgliedes, und mit ihm lässt sich ein mehrgängiges Wechselgetriebe schrittweise schalten. Bei der Darstellung nach Fig. 1 würde sich das Getriebe im konkreten Zusammenbau der Teile vor dem Schaltglied befinden. Eine Schaltwelle 10 führt aus dem Getriebe. In der Figurendarstellung ist die Schaltwelle 10 nur als Wellenstumpf dargestellt, der zwei in etwa waagrecht ausgerichtete Langlöcher 14 und 15 in den unteren Abschnitten des Betätigungselements 1 und des Mitnehmerelements 2 durchdringt. Im Übrigen ist die Schaltwelle 10 durch deren Wellenachse 11 symbolisiert. Im Getriebe ist die Schaltwelle mit einer üblichen Schaltwalze verbunden.

Die beiden Langlöcher 14 und 15 haben gleiche Länge und ihre abgerundeten, dem Außendurchmesser der Schaltwelle angepassten Endabschnitte dienen als Anschlag für die Schaltwelle 10 bei der Betätigung des Schaltglieds. Des Weiteren ist das Langloch 15 des Betätigungselements 1 leicht nach oben gekrümmt und in ihm wird die Schaltwelle 10 geführt. Die Unterseite des Langlochs 14 des Mitnehmerelements 2 fluchtet mit der Unterseite des Langlochs 15, während seine obere Längsseite 14a,14b die Form eines nach oben zeigenden symmetrischen Satteldachs aufweist. Mit dieser Kontur reicht sie über die obere Längsseite 15a des Langlochs 15 des Betätigungselements 1 hinaus (Fig. 4).

An einer mit der Schaltwelle 10 verbundenen und ebenfalls nicht dargestellten Kreisscheibe, üblicherweise als Schaltstern genannt, sind über einen Teilkreis sechs Mitnehmerstifte 12a - 12f in gleichem Abstand zueinander um die Wellenachse 11 angeordnet. Die Mitnehmerstifte 12a 12f werden durch das Schaltglied in der nachfolgend beschriebenen Weise beaufschlagt.

Hierfür ist das Mitnehmerelement 2 an seiner unteren Seite nach vorne und oben gebogen - in Richtung der Mitnehmerstifte 12a -12f. Es bildet sich auf diese Weise ein U-förmiger, nach oben offener Abschnitt 2c aus. Der zu den Mitnehmerstiften 12a -12f zeigende U-Schenkel weist in seinem Mittenbereich eine nach oben offene Ausnehmung 2d aus, die seitlich in hakenförmige Klauen 2e und 2f ausläuft. Der Abstand der Klauen 2e, 2f zueinander entspricht dem äußern Abstand zweier Mitnehmerstifte 12a - 12f; in Fig.3 beispielsweise der Mitnehmerstifte 12a und 12f. Anschließend an die Klauen 2e, 2f fällt die obere Stirnseite des U-Schenkels nach beiden Seiten in Form von Anlaufschrägen 2g, 2h nach außen ab.

Das Schaltglied arbeitet in folgender Weise. Fig. 3 zeigt seine Stellung bei einem beliebig eingelegten Gang. Die Mitnehmerstifte 12a und 12f befinden sich in der Ausnehmung 2d des U-förmigen Abschnitts nahe der Klauen 2e und 2f. Soll nun das Getriebe um einen Gang hochgeschaltet werden, wird das Schaltglied über den zuvor erwähnten Schalthebel und den an der Aufnahme 13 angreifenden Schaltarm um die Achse des Bolzens 8 nach links verschwenkt. Bei dieser Schwenkbewegung drückt die Klaue 2e den Mitnehmerstift 12a ebenfalls nach links und dieser dreht die mit ihm verbundene Schaltwelle im Urzeigersinn, wie dies ein Pfeil 16 in Fig. 3 andeutet.

Die Schwenkbewegung des Schaltglieds wird nach Fig. 4 dadurch begrenzt, dass die Schaltwelle 10 gegen die abgerundeten rechten Enden der Langlöcher 14 und 15 anschlägt. Die Schaltwelle 10 hat sich dabei entsprechend dem Pfeil 16 so weit gedreht, dass nunmehr der Mitnehmerstift 12b am äußeren Ende der Anlaufschräge 2g anliegt. Je nach Heftigkeit des betätigten Wählhebels könnte die Schaltwelle auf Grund ihrer Trägheit noch weiterdrehen wollen und damit ein Überschalten des Getriebes - als noch einen Gang höher - auslösen. Hierzu müsste der Mitnehmerstift 12b an der Anlaufschräge 2g "hochlaufen", was in Wirklichkeit ein "Nach-unten-Drücken" des Mitnehmerelements 2 entsprechend einem Pfeil 17 bedeuten würde. Dies verhindert aber ein wechselseitiges Blockieren von Schaltwelle 10 und dem Endabschnitt des Langloches 14. Mit anderen Worten, der Mitnehmerstift 12b kann das Mitnehmerelement 2 nicht nach unten drücken, da die Oberseite des Langloches 14 in dieser Stellung gegen den Außenseite der Schaltwelle stößt und damit eine derartige Bewegung unterbunden ist.

Wird andererseits der Schalthebel losgelassen, versucht eine nicht näher dargestellte Rückstellfeder das Schaltglied in seine Ausgangslage zurück zu verschwenken. In diesem Fall wird die Blockierung zwischen die Schaltwelle 10 und Mitnehmerelement 2 aufgehoben, da nunmehr die Schaltwelle 10 entlang der Dachschrägen-Kontur zurückgleiten kann. Der Mitnehmerstift 12b drückt über die Anlaufschräge 2g das Mitnehmerelement 2 gegen die Kraft der Rückholfeder 4 nach unten in Richtung des Pfeiles 17. Dabei ist zu beachten, dass die Dachschräge und die Anlaufschräge parallel verlaufen, also den gleichen Anlaufwinkel aufweisen. Das Schaltglied schwenkt nach rechts in seine Ausgangslage zurück. In dieser Lage hat der Mitnehmerstift 12b das Ende der Anlaufschräge 2g erreicht und gibt das Mitnehmerelement 2 frei. Die Rückholfeder 4 zieht es nach oben und die Mitnehmerstifte 12a und 12b tauchen in die Ausnehmung 2d im Bereich der Klauen 2f und 2e ein. Sie sind in dieser Lage bereit, bei erneutem Schaltwunsch die Schaltwelle 10 in der beschriebenen Weise um den nächsten Winkelabstand zu verdrehen.

Falls das Fahrzeuggetriebe um einen Gang heruntergeschaltet werden soll, verläuft der Vorgang entgegen gerichtet, wie leicht aus den Fig. 3 und 4 entnommen werden kann. In diesem Fall wird der Mitnehmerstift 12f nach rechts, also gegen den Uhrzeigersinn bewegt. Die Schaltwelle 10 dreht nun gegen den Uhrzeigersinn und sie wird durch die abgerundeten linken Endabschnitte der Langlöcher 14, 15 begrenzt. Die Blockierung und die Rückstellbewegung verlaufen dann analog zu den oben beschriebenen Abläufen.

## Patentansprüche

1. Schaltvorrichtung mit Überschaltsperre für ein mehrgängiges Wechselgetriebe eines Kraftfahrzeuges mit einer Schaltwelle (10), die über ein schwenkbares Schaltglied schrittweise verdreht wird, wobei das Schaltglied hakenförmige Klauen (2e, 2f) vorsieht, die beim Verschwenken des Schaltglieds die Schaltwelle (10) über Mitnehmerstifte (12a-12f) zum Einlegen eines nächst höheren oder nächst niedrigeren Getriebegang verdrehen, wobei das Schaltglied aus einem Betätigungselement (1) zur Einleitung der Verschwenkbewegung und einem Mitnehmerelement (2) zum Verdrehen der Schaltwelle (10) besteht und beide Elemente entlang einer gemeinsamen Längsachse (5) gegeneinander verschiebbar sind, wobei das Betätigungselement (1) und das Mitnehmerelement (2) durch Federkraft zueinander in einer Ausgangsstellung gehalten sind,
**dadurch gekennzeichnet, dass**
das Betätigungselement (1) und das Mitnehmerelement (2) von der Schaltwelle (10) durchdrungene Langlöcher (14, 15) mit oberen und unteren Längsseiten aufweisen, und die Schaltwelle (10) im Langloch (15) des Betätigungselements (1) entlang der oberen und unteren Längsseite geführt wird, wobei die Langlöcher (14, 15) in der Ausgangsstellung der beiden Elemente im Wesentlichen miteinander fluchten, indem die untere Längsseite des Langlochs (14) des Mitnehmerelements (2) in der Ausgangsstellung deckungsgleich mit der unteren Längsseite des Langlochs (15) der Betätigungselements (1) ist und dass die obere Längsseite (14a,14b) des Mitnehmerelements (2) eine in Form eines Satteldachs nach oben erweiternde Kontur gegenüber der oberen Längsseite (15a) des Langlochs (15) des Betätigungselements (1) aufweist.

## Claims

1. A gear-shift device with an over-shift lock for a variable multi-speed gearbox of a motor vehicle with a selector shaft (10) which is turned in steps by means of a pivotable gear-shift component, wherein the gear-shift component provides hook-shaped claws (2e, 2f) which upon pivoting of the gear-shift component turn the selector shaft (10) by means of driving pins (12a - 12f) to engage a next-higher or next-lower gear, wherein the gear-shift component comprises an actuating element (1) for initiating the pivoting movement and a driving element (2) for turning the selector shaft (10), and both elements are displaceable relative to each other along a common longitudinal axis (5), wherein the actuating element (1) and the driving element (2) are held relative to each other in a starting position by spring force,
**characterised in that**
the actuating element (1) and the driving element (2) have elongate holes (14, 15) with upper and lower long sides, through which holes the selector shaft (10), and the selector shaft (10) is guided along the upper and lower long side in the elongate hole (15) of the actuating element (1), the elongate holes (14,15) in the starting position of the two elements being substantially flush with one another **in that** the lower long side of the elongate hole (14) of the driving element (2) in the starting position is congruent with the lower long side of the elongate hole (15) of the actuating element (1) and **in that** the upper long side (14a, 14b) of the driving element (2) has a contour which widens upwards in the form of a gable roof relative to the upper long side (15a) of the elongate hole (15) of the actuating element (1).

## Revendications

1. Dispositif de commutation équipé d'un blocage de passage pour une boîte de vitesses à plusieurs rapports d'un véhicule, comprenant un arbre de commutation (10) qui est déplacé en rotation pas à pas par un organe de commutation pivotant, disposant de pattes en forme de crochets (2e, 2f) qui, lors d'un pivotement de l'organe de commutation font tourner l'arbre de commutation (10) par l'intermédiaire de broches d'entraînement (12a, 12f) pour enclencher le rapport immédiatement supérieur ou immédiatement inférieur, l'organe de commutation étant constitué d'un élément de manoeuvre (1) permettant d'enclencher le mouvement de pivotement et d'un élément d'entraînement (2) permettant de faire tourner l'arbre de commutation (10), et les deux éléments pouvant coulisser l'un par rapport à l'autre le long d'un axe longitudinal commun (5), l'élément de manoeuvre (1) et l'élément d'entraînement (2) étant maintenus dans une position de repos l'un par rapport à l'autre par une force élastique,
**caractérisé en ce que**
l'élément de manoeuvre (1) et l'élément d'entraînement (2) comportent des perçages oblongs (14, 15) traversés par l'arbre de commutation (10) ayant un côté longitudinal supérieur et un côté longitudinal inférieur, l'arbre de commutation (10) est guidé, dans le perçage oblong (15) de l'élément de manoeuvre (1) le long du côté longitudinal supérieur et du côté longitudinal supérieur, les trous oblong (14, 15) étant essentiellement alignés dans la position de repos des deux éléments du fait que le côté longitudinal inférieur du perçage oblong (14) de l'élément d'entraînement (2) coïncide dans la position de repos avec le côté longitudinal inférieur du perçage oblong (15) de l'élément de manoeuvre (1) et le côté longitudinal supérieur (14a, 14b) de l'élément d'entraînement (2) a un contour s'élargissant vers le haut en forme de toit à deux pentes par rapport au côté longitudinal supérieur (15a) du perçage oblong (15) de l'élément de manoeuvre (1).
